# DEMANDE DE BREVET EUROPEEN

(11) **EP 1 298 956 A1**
(43) Date de publication de la demande: **02.04.2003**
(21) Numéro de dépôt: 02292300.7
(22) Date de dépôt: 19.09.2002
(51) Int. Cl.: H04Q 11/00, H04B 10/24

(54) **Système optique directionnel re-configurable**

(30) Priorité: 01.10.2001 FR 0112596
(71) Demandeur: ALCATEL, 75008 Paris (FR)
(72) Inventeur: Noirie, Ludovic, 91620 Nozay (FR); Faure, Jean-Paul, 75014 Paris (FR); Bisson, Arnaud, Ilot des Cours-Bât. C., 91400 Orsay (FR)
(74) Mandataire: Sciaux, Edmond

(57) **Abrégé**

Système optique directionnel re-configurable comprenant N accès (210) pouvant être configurés individuellement en tant qu'entrée ou sortie. Un tel système comprend au moins un dispositif optique (230) ayant des entrées (250) et des sorties (240) unidirectionnelles dont le nombre total est égal ou inférieur à N, et un commutateur optique NxN (260) adapté pour que chacun des accès (210) puisse être couplé indifféremment soit à une des entrées (250), soit à une des sorties (240) du dispositif optique (230).

## Description

La présente invention concerne la technologie des transmissions sur fibres optiques en général, et décrit plus particulièrement un système optique directionnel reconfigurable.

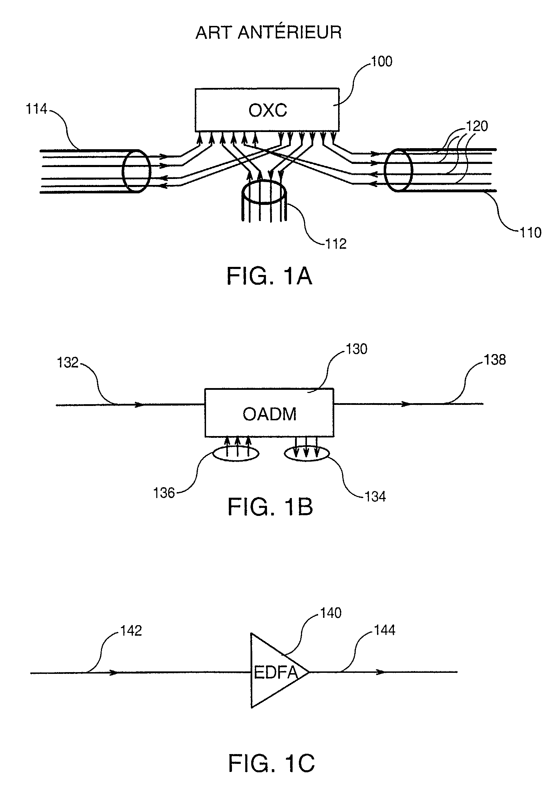

L'utilisation de fibres optiques pour la réalisation de nouveaux réseaux de communication est devenue la règle. De grandes quantités de ces fibres ont déjà été installées souvent, comme montré sur la figure 1A, sous forme de câbles (110) regroupant plusieurs fibres (120). Ces câbles servent à interconnecter des équipements optiques de communication, par exemple un système optique d'interconnexion ou OXC (100) pour 'Optical Cross-Connect', permettant de distribuer le trafic circulant entre les fibres des trois câbles (110, 112, 114) dans cet exemple particulier de la figure 1A.

On peut rencontrer d'autres dispositifs optiques dans un réseau de communication à base de fibre optiques. La figure 1B montre un dispositif souvent nécessaire qui est un multiplexeur d'insertion et d'extraction optique du trafic local ou OADM (130) pour 'Optical Add/Drop Multiplexer'. Dans ce cas la partie du trafic entrant sur une ou plusieurs fibres (132), et qui est destinée à une utilisation locale, est dérivée par le dispositif OADM qui doit aussi insérer le trafic généré localement (136). Ainsi le trafic sortant sur une ou plusieurs fibres (138) comprend tout le trafic entrant (132) moins le trafic dérivé localement (134) plus le trafic généré localement (136).

Un autre type de dispositif utilisé dans les réseaux optiques, figurant sur la figure 1C, est un amplificateur de lumière (140) souvent du type EDFA pour 'Erbium Doped optical Fiber Amplifier' qui sert à amplifier le niveau des signaux lumineux entrant (142). Lorsque ceux-ci doivent être propagés sur de grandes distances, l'amplificateur restitue en sortie (144) un niveau suffisant pour leur traitement local ou comme relais vers une destination encore plus lointaine.

On n'aura pas manqué de noter à l'examen des figures 1A, 1B et 1C que les différents dispositifs optiques utilisent les fibres installées toujours dans le même sens de propagation. Ainsi, dans la figure 1A, les quatre fibres du câble à gauche de la figure (114) propagent les signaux lumineux pour deux des fibres vers la droite et pour les deux autres fibres vers la gauche. La situation est similaire pour les autres câbles (110, 112). Ainsi, les ressources en fibres sont attribuées d'une façon fixe avec pour conséquence que les ressources dans une direction doivent être attribuées pour le pic de trafic à supporter dans cette direction. Or, les spécialistes des réseaux de communications savent bien que, d'une part, le trafic à un noeud du réseau peut être très dissymétrique, une direction devant pouvoir supporter le transport d'une beaucoup plus grande quantité d'informations que l'autre. C'est en particulier le cas des réseaux de vidéo distribution qui se mettent en place où la quantité d'informations à distribuer, sous forme d'images, est toujours infiniment plus importante que la quantité d'informations contenue dans les requêtes initiales reçues des utilisateurs. D'autre part l'asymétrie du trafic peut changer dans le temps, par exemple sur une période de 24 heures. C'est le cas des échanges internationaux de données notamment entre l'Europe et l'Amérique du Nord en raison des décalages horaires.

Ainsi, l'attribution fixe des ressources en fibres optiques d'un réseau suppose que celles-ci doivent être dimensionnées pour les pics du trafic dans l'une et l'autre direction alors même que ces pics de trafic peuvent ne jamais se produire simultanément et qu'une partie des ressources reste ainsi toujours inutilisée.

C'est pourquoi le but de l'invention est de fournir un système optique directionnel qui soit reconfigurable de façon à permettre l'attribution des ressources en fibres optiques d'un réseau d'une façon dynamique.

L'objet de l'invention est donc un système optique directionnel re-configurable comprenant N accès répartis en une pluralité de câbles, chaque accès pouvant être configuré individuellement en tant qu'entrée ou sortie ; ledit système comprenant :
- au moins un dispositif optique ayant des entrées et des sorties unidirectionnelles dont le nombre total est égal ou inférieur à N, et
- un commutateur optique NxN adapté pour que chacun desdits accès puisse être couplé indifféremment soit à une desdites entrées, soit à une desdites sorties dudit dispositif optique ; ledit commutateur optique NxN étant réalisé à partir d'une combinaison de commutateurs optiques nxp de plus petite taille, et où n et p sont inférieurs à N ;
**caractérisé** en ce que le nombre de commutateurs de petite taille de ladite première couche de commutation est égal au nombre desdits câbles et le nombre de commutateurs de petite taille de ladite seconde couche de commutation est égal au nombre le plus élevé entre le nombre d'entrées et le nombre de sorties dudit dispositif optique de sorte qu'une entrée et une sortie dudit dispositif optique puissent être connectées à deux câbles distincts parmi ladite pluralité de câbles.

Le système selon l'invention permet de changer le sens de propagation des signaux lumineux dans un réseau de fibres optiques pour éviter d'avoir à dimensionner celui-ci selon le trafic de pointe à supporter, dans l'une et l'autre directions, entre deux noeuds du réseau.

Les buts, objets, ainsi que les caractéristiques et avantages de l'invention ressortiront mieux de la description détaillée d'un mode préféré de réalisation de cette dernière. illustré par les dessins d'accompagnement dans lesquels :
Les FIGURES 1A, 1B et 1C sont des exemples illustrant l'art antérieur où les signaux optiques sont propagés toujours dans la même direction.
La FIGURE 2 est le mode de réalisation général mettant en oeuvre le système selon l'invention.
La FIGURE 3 est un mode de réalisation particulier du système optique selon l'invention.
Les FIGURES 4A, 4B et 4C illustrent d'autres modes de réalisation particuliers du système optique selon l'invention qui mettent en oeuvre des simplifications en fonction des dispositifs optiques utilisés.
La FIGURE 5 montre un exemple de réalisation du système optique selon l'invention utilisant des amplificateurs optiques.

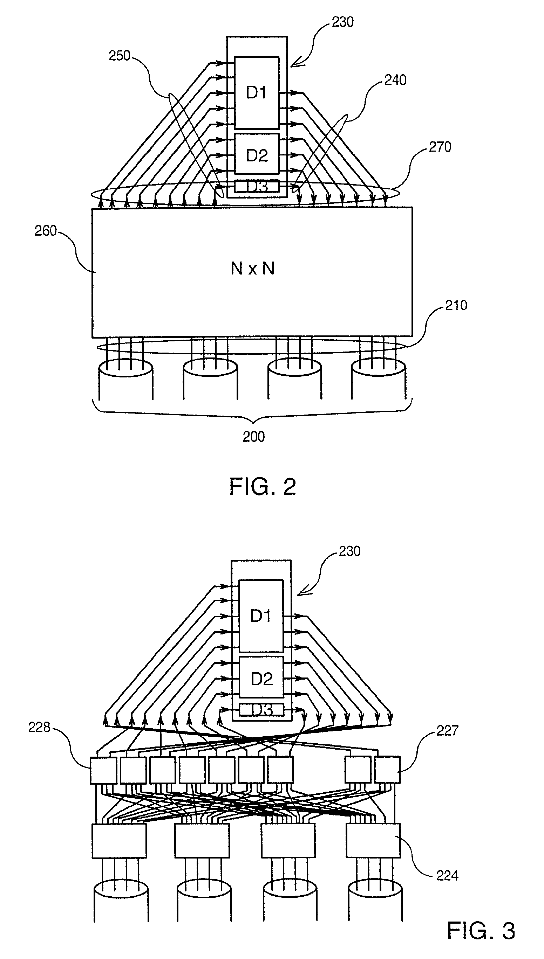

Le principe général de l'invention est décrit avec la **figure 2** qui montre un ensemble de câbles (200) de fibres optiques dont le sens de propagation de chacune des fibres individuelles, par exemple (210), n'est pas attribué d'une façon fixe contrairement à l'art antérieur discuté précédemment avec les figures 1A à 1C. Les fibres optiques doivent accéder à un dispositif (230) formé de plusieurs sous-dispositifs D1, D2, D3 pour le traitement des signaux optiques qu'elles transportent. Ces dispositifs sont, entre autres, du type de ceux montrés dans les figures 1A à 1C c'est à dire OXC, OADM et amplificateur optique. Bien sûr, la liste précédente n'est pas limitative et reprend seulement des dispositifs optiques classiques qui peuvent être concernés par l'invention. Selon l'invention l'accès à ces dispositifs se fait par l'intermédiaire d'un commutateur optique NxN (260) c'est à dire capable de connecter optiquement n'importe laquelle des N entrées/sorties supérieures (270) avec n'importe laquelle des N entrées/sorties inférieures (210). Dans le cas présent, N correspond au total des entrées et sorties des dispositifs optiques (230), au nombre de 16 dans cet exemple particulier, réparties en 7 sorties (240) et 9 entrées (250) connectées sur les entrées/sorties supérieures (270) du commutateur optique (260). Les différents dispositifs optiques (230) sont disponibles pour traiter l'information qui doit circuler sur l'ensemble des câbles (200) regroupant donc au moins N fibres, 16 fibres dans cet exemple étant connectées sur les entrées/sorties inférieures (210) du commutateur optique. Ainsi, les fibres optiques peuvent être réparties individuellement pour utiliser aux mieux les dispositifs optiques en fonction du trafic à transporter à un moment donné. Ceci suppose implicitement que le sens de circulation des signaux lumineux dans le commutateur optique (260) peut se faire indifféremment entre les entrées/sorties du haut (270) et celles du bas (210). La figure 2 n'est bien entendu, qu'un exemple particulier d'utilisation du commutateur optique (260).

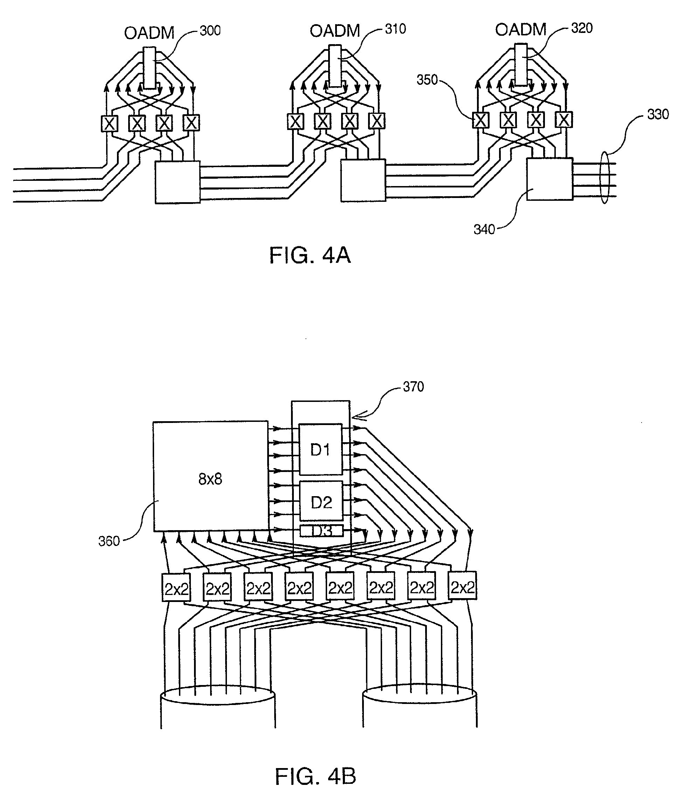

Reprenant la solution générale de la figure 2, **la figure 3** est un exemple de mise en oeuvre plus spécifique de l'invention faisant appel à des commutateurs optiques de plus petites dimensions ne disposant donc pas individuellement des deux fois N entrées/sorties nécessaires. Le commutateur (260) de la figure 2 peut donc en pratique être mis en oeuvre, par exemple, à partir de deux groupes de commutateurs plus petits. Un premier groupe est constitué de quatre commutateurs 4x9 (224) constituant une première couche de commutation alimentant une seconde couche comprenant des commutateurs 4x2 (228) et 4x1 (227), étant entendu que ces derniers peuvent être, en pratique, des 4x2 dont on n'utilise qu'une sortie. On obtient ainsi la même fonctionnalité que celle de la figure 2 avec cependant des commutateurs de petite taille. On remarquera notamment que la première couche de commutateurs associe un commutateur à chaque câble, autorisant ainsi la commutation de n'importe quelle fibre d'un câble vers n'importe quel commutateur de la deuxième couche. Cette dernière associe un commutateur par paire entrée/sortie du dispositif directionnel (230). S'il y a plus d'entrées que de sorties, comme c'est le cas dans l'exemple de la figure 3 où il y a 9 entrées pour 7 sorties, la deuxième couche doit associer en outre un commutateur (227) par entrée supplémentaire, au nombre de deux dans cet exemple. L'inverse est vrai également. Si le dispositif directionnel (230) a plus de sorties que d'entrées, un commutateur doit être associé à chaque sortie supplémentaire. Ainsi, chacun de ces commutateurs de la deuxième couche permet de relier une entrée et une sortie séparément vers deux câbles distincts à travers les commutateurs de la première couche.

La mise en oeuvre de l'invention peut se décliner de nombreuses façons sans déroger en rien à l'esprit de celle-ci. En particulier, des simplifications peuvent être réalisées en fonction des dispositifs optiques qui sont accédés par les fibres optiques. **La figure 4A** montre une série (300, 310 et 320) de multiplexeurs d'insertion et d'extraction optique (OADM) tels qu'on peut les trouver dans les noeuds successifs, par exemple, d'un réseau en anneau. Dans ce cas, la boucle étant constituée de câbles de quatre fibres (330), un commutateur optique de 4x4 (340) est suffisant, avec les quatre commutateurs 2x2 (350), pour réarranger le sens de circulation des fibres alors que dans le cas général de la figure 2, un commutateur 8x8 était nécessaire, et dans le cas de la figure 3, 2 commutateurs 4x4 étaient nécessaires. La figure 4A n'est qu'un exemple d'arrangements possibles avec cette configuration où les dispositifs optiques sont des OADM ou des dispositifs similaires, exemple pour lequel chaque commutateur 2x2 est relié d'un côté directement à une entrée et à une sortie des dispositifs optiques (320), et de l'autre côté à chacun des deux câbles, pour l'un directement, et pour l'autre à travers une matrice de commutation 4x4 (340).

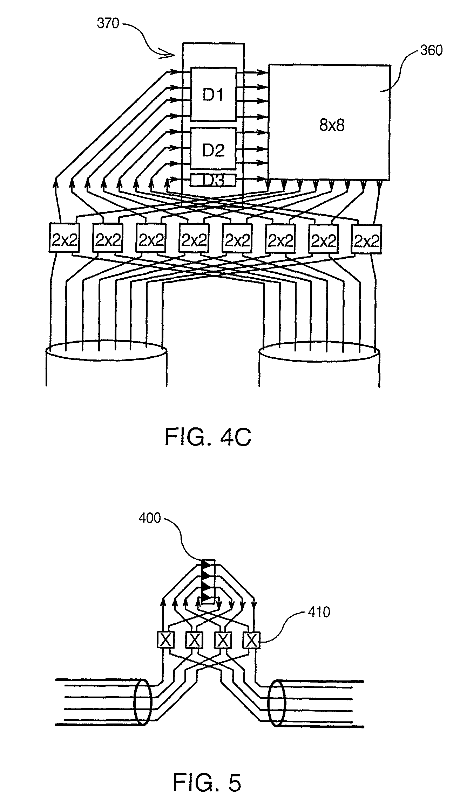

Les **figures 4B et 4C** montrent d'autres arrangements possibles aboutissant au même résultat en termes de nombre d'éléments nécessaires. La figure 4B illustre l'exemple d'un commutateur 8x8 (360) placé devant les huit entrées d'un dispositif optique (370) du type de ceux de la figure 4A alors que deux câbles de huit fibres chacun sont connectés sur huit commutateurs optiques 2x2 similaires à ceux de la figure 4A. Si l'on compare cet exemple particulier de réalisation à la solution générale décrite avec la figure 2, on notera immédiatement qu'un commutateur 16x16 aurait dû normalement être employé. On peut aussi comparer la réalisation illustrée avec la figure 4B à celle décrite dans la figure 3 et qui aurait requis l'utilisation de deux commutateurs 8x8 alors qu'un seul est ici nécessaire. Par ailleurs, on notera que, par rapport à la figure 4A, il s'agit simplement d'un positionnement différent du commutateur (360). Alors que dans la figure 4A, le commutateur (340) est placé avant les commutateurs 2x2 (350) il est, dans la figure 4B, placé entre les commutateurs 2x2 et les dispositifs optiques (370).

La figure 4C montre un autre positionnement possible du commutateur 8x8 (360) de la figure précédente, le commutateur étant placé ici en sortie des dispositifs optiques (370).

**La figure 5** montre un autre mode de mise en oeuvre de l'invention qui apporte une simplification encore plus grande dans le cas de dispositifs du type amplificateur optique (400). Dans ce cas, les accès sont répartis en deux câbles et seuls des commutateurs optiques 2x2 (410) sont nécessaires pour pouvoir utiliser les fibres, et les amplificateurs, dans l'une ou l'autre direction. En outre, chacun des commutateurs 2x2 est connecté directement à une entrée et une sortie de l'amplificateur .

La figure 3, les figures 4A, 4B et 4C ainsi que la figure 5 ont pour but de montrer que la mise en oeuvre de l'invention peut prendre de nombreuses formes avec des avantages particuliers en fonction des dispositifs optiques utilisés et des configurations de câbles de fibres optiques qu'il faut interconnecter. L'homme de l'art saura apprécier les avantages qu'il y aurait à utiliser, dans un contexte particulier, l'une ou l'autre de ces formes lors de la réalisation de l'invention.

## Revendications

1. Système optique directionnel re-configurable comprenant N accès (210) répartis en une pluralité de câbles (200), chaque accès pouvant être configuré individuellement en tant qu'entrée ou sortie ; ledit système comprenant :
- au moins un dispositif optique (230) ayant des entrées (250) et des sorties (240) unidirectionnelles dont le nombre total est égal ou inférieur à N, et
- un commutateur optique NxN (260) adapté pour que chacun desdits accès (210) puisse être couplé indifféremment soit à une desdites entrées (250), soit à une desdites sorties (240) dudit dispositif optique (230) ; ledit commutateur optique NxN comprenant une première et une seconde couche de commutation, réalisées à partir de commutateurs optiques nxp de plus petite taille (224, 227 et 228), et où n et p sont inférieurs à N ;
**caractérisé en ce que** le nombre de commutateurs de petite taille (224) de ladite première couche de commutation est égal au nombre desdits câbles, et le nombre de commutateurs de petite taille (227, 228) de ladite seconde couche de commutation est égal au nombre le plus élevé entre le nombre d'entrées et le nombre de sorties dudit dispositif optique (230) de sorte qu'une entrée et une sortie dudit dispositif optique puissent être connectées à deux câbles distincts parmi ladite pluralité de câbles.

2. Système selon la revendication 1, **caractérisé en ce que** ladite première couche de commutation comporte une pluralité de commutateurs de petite taille (224) connectés directement auxdits accès, et ladite seconde couche de commutation comporte une pluralité de commutateurs de petite taille (227, 228) connectés directement aux entrées et sorties dudit dispositif optique (230), lesdites plusieurs couches de commutation réalisant ensemble la fonction globale dudit commutateur optique.

3. Système selon la revendication 1, **caractérisé en ce que** les entrées dudit dispositif optique (370) sont toutes connectées à un seul commutateur optique de plus petite taille (360), les entrées dudit commutateur optique de plus petite taille et les sorties dudit dispositif optique étant connectées à une série de commutateurs 2x2 pour assurer ensemble la fonction globale dudit commutateur optique.

4. Système selon la revendication 1, **caractérisé en ce que** les sorties dudit dispositif optique (370) sont toutes connectées à un seul commutateur optique de plus petite taille (360), les sorties dudit commutateur optique de plus petite taille et les entrées dudit dispositif optique étant connectées à une série de commutateurs 2x2 pour assurer ensemble la fonction globale dudit commutateur optique.

5. Système selon la revendication 3, **caractérisé en ce que** lesdits accès sont répartis en deux câbles et chacun desdits commutateurs 2x2 est connecté à chacun desdits câbles de sorte que une entrée et une sortie dudit dispositif optique (370) puissent être connectées respectivement à chacun des deux câbles.

6. Système selon la revendication 1, **caractérisé en ce que** lesdits accès sont répartis en deux câbles (330) et ledit commutateur optique comprend une couche de commutateurs 2x2 (350), chacun desdits commutateurs 2x2 étant connecté d'un côté directement à une entrée et une sortie dudit dispositif optique (320), et de l'autre à chacun desdits câbles, directement pour l'un d'eux et par l'intermédiaire d'une matrice de commutation 4x4 (340) pour l'autre.

7. Système selon la revendication 1, **caractérisé en ce que** ledit dispositif optique est du type amplificateur optique (400).

8. Système selon la revendication 7, **caractérisé en ce que** lesdits accès sont répartis en deux câbles et ledit commutateur optique comprend une couche de commutateurs 2x2 (410), chacun desdits commutateurs 2x2 étant connecté à une entrée et une sortie dudit amplificateur optique (400).

9. Système selon l'une des revendications 1 à 8, caractérisé en ce ledit dispositif optique (230, 370) est composé de plusieurs sous-dispositifs optiques (D₁, D₂, D₃).

10. Arrangement composé d'une pluralité de multiplexeurs d'insertion et d'extraction optique OADM (300, 310, 320) en série **caractérisé en ce que** chacun desdits multiplexeurs est un système selon l'une des revendications 1 à 8.
